# EUROPÄISCHE PATENTSCHRIFT

(11) **EP 1 004 618 B1**
(45) Veröffentlichungstag und Bekanntmachung des Hinweises auf die Patenterteilung: **14.07.2004**
(21) Anmeldenummer: 99120657.4
(22) Anmeldetag: 19.10.1999
(51) Int. Cl.: C08K 3/04, C08L 77/00

(54) **Artikel mit antistatischen Eigenschaften**
Articles having antistatic properties
Articles ayant des propriétés antistatiques

(30) Priorität: 27.11.1998 DE 19854819
(43) Veröffentlichungstag der Anmeldung: 31.05.2000
(73) Patentinhaber: Degussa AG, 40474 Düsseldorf (DE)
(72) Erfinder: Baumann, Franz-Erich, Dr., 48249 Dülmen (DE); Beuth, Reinhard, 45772 Marl (DE); Kübber, Josef, 47608 Geldern (DE); Schlobohm, Michael, Dr., 45721 Haltern (DE)

(56) Entgegenhaltungen:
- EP-A- 0 470 606
- EP-A- 0 953 796
- WO-A-99/33908

## Beschreibung

Gegenstand der vorliegenden Erfindung ist ein Artikel, der antistatisch ausgerüstet ist.

Bei Leitungssystemen, in denen brennbare Flüssigkeiten transportiert werden, wie z. B. Kraftstoffleitungssystemen für Fahrzeuge oder Flugzeuge oder Tankstellenversorgungsleitungen, wird zunehmend der Werkstoff Metall durch geeignete Thermoplaste substituiert. Hierbei ergeben sich Einsparungen beim Gewicht und den Herstellungskosten, man handelt sich aber den Nachteil potentiell möglicher elektrostatischer Aufladung ein.

Die durch fließenden Kraftstoff oder Lösemittel hervorgerufene elektrostatische Aufladung kann sich unter bestimmten Bedingungen schlagartig entladen und Löcher in der Rohrleitungswand erzeugen, durch die der Kraftstoff bzw. das Lösemittel ins Freie gelangen kann. Bei Kontakt mit heißen umgebenden Teilen oder bei Funkenbildung können sich Kraftstoff bzw. Lösemittel entzünden und zu einem Brand des Fahrzeugs oder der Anlage führen. Bei Tanks, in denen der Kraftstoff bei Teilfüllung umherschwappen kann, kann darüber hinaus die elektrische Entladung zündfähige Gemische, die sich im Innern befinden, zur Explosion bringen.

Zur Vermeidung dieses Problems ist es bekannt, die Komponenten des Leitungssystems antistatisch auszurüsten. Beispielsweise wird in der DE 40 25 301 C1 eine antistatische Kraftstoffleitung für Kraftfahrzeuge beschrieben, die aus mindestens zwei unterschiedlichen Polymerschichten aufgebaut ist, wobei mindestens eine der Schichten mit elektrisch leitenden Additiven wie Leitruß modifiziert ist. Die Kraftstoffleitung wird in dieser Schrift zwar als peroxidbeständig bezeichnet; es hat sich aber herausgestellt, daß dies nur für die Schichten gilt, die nicht den Ruß enthalten; die Schädigung der relativ dünnen antistatisch ausgerüsteten Schicht wird bei den dort verwendeten Untersuchungsbedingungen nicht erkannt.

Inzwischen hat sich jedoch gezeigt, daß die bisher verwendeten Leitruße eine nachteilige katalytische Aktivität besitzen. Die damit ausgerüsteten Mehrschichtrohre weisen nach Lagerung in peroxidhaltigen Kraftstoffen (sour gas), z. B. nach der Ford-Spezifikation FLTM AZ 105-01, PN180 oder nach der GM-Spezifikation GM213M, PN50, bereits nach relativ kurzer Zeit eine gravierende Verschlechterung der Kälteschlagzähigkeit auf. Als weiteres Problem hat sich herausgestellt, daß derartige Mehrschichtrohre unter Wärmeeinwirkung wie z. B. unter der Motorhaube, deutlich schneller altern und hierbei versproden.

Ausgangspunkt der EP-A-0 730 115 war die Erkenntnis, daß sich die Beständigkeit von antistatisch ausgerüsteten Mehrschichtrohren gegenüber peroxidhaltigen Kraftstoffen verbessert, wenn kein Leitruß verwendet wird, sondern statt dessen Graphitfibrillen eingesetzt werden. Diese Verbesserung reicht aber in der Praxis in vielen Fallen nicht aus. Zudem liegt auch hier noch die Alterung unter Wärmeeinwirkung auf einem für die Praxis unangemessen hohen Niveau. Hinzu kommt, daß Graphitfibrillen sehr teuer sind.

In der EP-A-0 745 763 wird ein Kunststoff-Kraftstoffilter beschrieben, dessen Gehäuse aus mindestens drei Schichten besteht, wobei die innere und die äußere Schicht aus einem leitfähig ausgerüsteten Kunststoff bestehen. Als elektrisch leitfähiger Zusatz werden unter anderem Leitruß und Graphitfibrillen genannt. Dieser Kraftstoffilter leidet an den gleichen Nachteilen, wie sie oben diskutiert wurden.

In der nachveröffentlichten EP-A-0 953 796 werden Formmassen auf Basis von Polyamiden offenbart, die mit Leitruß mit niedriger spezifischer Oberfläche modifiziert sind. Die Formmassen werden zur Herstellung von Rohren verwendet, die auch mehrschichtig aufgebaut sein können und gegebenenfalls auch eine Schicht aus Polybutylenterephthalat enthalten können. Die EP-A-0 953 796 lehrt die Verwendung dieser Rohre als Kraftstoffleitungen.

Die nicht vorveröffentlichte WO 99/33 908 offenbart Polyamidformmassen, die eine ausreichende Menge eines bestimmten Leitrußes enthalten, um die Masse antistatisch auszurüsten. Der Leitruß besitzt eine niedrige spezifische Oberfläche und einen niedrigen Wert für die Absorption von DBP. Die Verwendung dieser Formmassen für Mehrschichtrohre und insbesondere Kraftstoffleitungen geht aus dieser Schrift ebenfalls hervor.

Der Erfindung liegt die Aufgabe zugrunde, antistatisch ausgerüstete Artikel herzustellen, die sowohl eine hohe Beständigkeit gegenüber peroxidhaltigen Kraftstoffen bzw. Lösemitteln aufweisen als auch eine nur geringe Anfälligkeit gegenüber Wärmealterung besitzen.

Die Lösung dieser Aufgabe geht von der Erkenntnis aus, dass ein Kunststoffartikel die gewünschten Eigenschaften besitzt, der zumindest in einem Teilbereich aus einer thermoplastischen, Polyamid enthaltenden Formmasse besteht, die 3 bis 30 Gew.-%, bevorzugt 10 bis 25 Gew.-% und besonders bevorzugt 16 bis 20 Gew.-% eines Leitrußes enthält, welcher durch folgende Eigenschaften gekennzeichnet ist:
a) Dibutylphthalat(DBP)-Absorption gemäß ASTM D2414 von 100 - 300 ml/100 g, bevorzugt 140 - 270 ml/100 g;
b) Spezifische Oberfläche, gemessen über Stickstoffabsorption gemäß ASTM D3037, von 30 - 180 m²/g, bevorzugt 40 - 140 m²/g;
c) Aschegehalt gemäß ASTM D1506 niedriger als 0,1 Gew.-%, bevorzugt niedriger als 0,06 Gew.-%, besonders bevorzugt niedriger als 0,04 Gew.-%;
d) Gritanteil von maximal 25 ppm, bevorzugt maximal 15 ppm und besonders bevorzugt maximal 10 ppm.

Unter Grit versteht man hierbei harte koksähnliche Partikel, die im Herstellungsprozeß durch Vercrackungsreaktionen entstehen.

Hierbei sind zwei Ausführungsformen möglich:
1. Der Kunststoffartikel besteht vollständig aus dieser Formmasse; er hat also einen einschichtigen Aufbau
2. Der Kunststoffartikel besteht aus mindestens zwei Schichten, wobei mindestens eine Schicht aus der erfindungsgemäß verwendeten Formmasse und die weiteren Schichten aus einer anderen, nicht antistatisch eingestellten Formmasse bestehen. Beispielsweise besteht der Artikel aus 2, 3, 4, 5, 6 oder auch mehr Schichten. Bei einem hohlen Kunststoffartikel kann die antistatische Schicht als Außenschicht vorliegen oder im mittleren Bereich plaziert sein; zweckmäßigerweise bildet sie jedoch die innerste Schicht.

Weiterhin kann bei einem hohlen Kunststoffartikel wie z.B. einem Rohr die antistatische Schicht bevorzugt über den gesamten Umfang des hohlen Artikels ausgebildet sein; sie kann aber auch nur einen kleineren Teil des Umfangs einnehmen und so als gerades oder spiraliges Band ausgeführt sein.

Die nicht antistatischen Schichten haben die Aufgabe, dem Artikel die geforderten Funktionseigenschaften wie Festigkeit, Schlagzähigkeit, Flexibilität oder Sperrwirkung gegenüber Kraftstoffkomponenten zu verleihen. Hierbei sollten die einzelnen Schichten, von Sonderkonstruktionen abgesehen, fest aufeinander haften, was bei nicht miteinander kompatiblen Schichten mittels eines Haftvermittlers bewirkt werden kann.

Geeignete Schichtenkonfigurationen und Werkstoffe können für den Fall von kraftstofführenden Systemen beispielsweise den DE-OSS 40 25 301, 41 12 662, 41 12 668, 41 37 430, 41 37 431, 41 37 434, 42 07 125, 42 14 383, 42 15 608, 42 15 609, 42 40 658, 43 02 628, 43 10 884, 43 26 130, 43 36 289, 43 36 290, 43 36 291, 44 10 148, 44 18 006, 195 07 026, 196 41 946 sowie WO-A-93/21466, WO-A-93/25835, WO-A-94/09302, WO-A-94/09303, WO-A-95/27866, WO-A-95/30105, EP-A-0 198 728, EP-A-0 558 373 und EP-A-0 730 115 entnommen werden. Bei den dort offenbarten Hohlprofilen bzw. Hohlkörpern kann eine der Schichten erfindungsgemäß antistatisch ausgerüstet sein oder es wird eine zusätzliche antistatische Schicht hinzugefügt.

Die antistatisch ausgerüstete Formmasse kann jedes beliebige Polyamid zu mindestens 10 Gew.-%, bevorzugt mindestens 40 Gew.-% und besonders bevorzugt mindestens 70 Gew.-% enthalten. In einer ersten Ausgestaltung der Erfindung gemäß Anspruch 1 besteht mindestens eine der weiteren Schichten aus einer Polyolefin-Formmasse oder einem Kautschuk, oder im Falle einer Sperrschicht gegen Kraftstoffbestandteile oder Lösemittel gemäß dem Stand der Technik aus einer Formmasse auf Basis von Polyethylen-2.6-naphthalat, Polybutylen-2.6-naphthalat, einem Fluorpolymer wie Polyvinylidenfluorid (PVDF), ETFE, THV, ECTFE, Polyolefinen oder Ethylen/Vinylalkohol-Copolymer (EVOH). Hinsichtlich geeigneter Ausführungen sei auf die oben genannten Patentanmeldungen verwiesen.

Als Polyamid kommen hierbei in erster Linie aliphatische Homo- und Copolyamide in Frage. Als Beispiel seien die 4.6-, 6.6-, 6.12-, 8.10-, 10. 10-Polyamide o. ä. genannt. Bevorzugt werden 6-, 10.12-, 11-, 12- sowie 12.12-Polyamide. [Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, daß von einer α, ω-Aminocarbonsäure bzw. von dem davon abgeleiteten Lactam ausgegangen worden ist - H. Domininghaus, Die Kunststoffe und ihre Eigenschaften, Seite 272, VDI-Verlag (1976).]

Sofern Copolyamide verwendet werden, können diese z. B. Adipinsäure, Sebacinsäure, Korksäure, Isophthalsäure oder Terephthalsäure als Cosäure bzw. Bis(4-aminocyclohexyl)methan, Trimethylhexamethylendiamin, Hexamethylendiamin o. ä. als Codiamin enthalten.

Die Herstellung dieser Polyamide ist bekannt (z. B.: D. B. Jacobs, J. Zimmermann, Polymerization Processes, S. 424 - 467; Interscience Publishers, New York (1977); DE-AS 21 52 194).

Ebenfalls geeignet als Polyamide sind gemischt aliphatisch/aromatische Polykondensate, wie sie z. B. in den US-PSS 2 071 250, 2 071 251, 2 130 523, 2 130 948, 2 241 322, 2 312 966, 2 512 606, 3 393 210 bzw. in Kirk-Othmer, Encyclopedia of Chemical Technology, 3. Aufl., Vol. 18, Wiley & Sons (1982), S. 328 und 435, beschrieben werden. Weitere als Polyamide geeignete Polykondensate sind Poly(etheresteramide) bzw. Poly(etheramide). Derartige Produkte werden z. B. in den DE-OSS 27 12 987, 25 23 991 und 30 06 961 beschrieben.

Das Molekulargewicht (Zahlenmittel) der Polyamide liegt oberhalb von 4 000, vorzugsweise oberhalb von 10 000. Bevorzugt liegt hierbei die relative Viskosität (ηᵣₑₗ) im Bereich von 1,65 bis 2,4 (gemessen nach ISO 307/DIN 53 727).

Sofern erforderlich, können die Polyamide schlagzäh eingestellt werden. Geeignete Modifier sind z. B. Ethylen/Propylen- oder Ethylen/Propylen/Dien-Copolymere (EP-A-0 295 076), Acrylat-Nitrilkautschuk , Polypentenylen, Polyoctenylen oder statistische bzw. blockartig aufgebaute Copolymere aus alkenylaromatischen Verbindungen mit aliphatischen Olefinen oder Dienen (EP-A-0 261 748). Weiterhin können als schlagzähmachende Kautschuke Kern/Schale-Kautschuke mit einem zähelastischen Kern aus (Meth)Acrylat-, Butadien- oder Styrol/Butadien-Kautschuk mit Glastemperaturen T_{g} < -10 °C verwendet werden, wobei der Kern vernetzt sein kann. Die Schale kann aus Styrol und/oder Methylmethacrylat und/oder weiteren ungesättigten Monomeren aufgebaut sein (DE-OSS 21 44 528, 37 28 685). Der Anteil an schlagzähmachender Komponente ist so zu wählen, daß die gewünschten Eigenschaften nicht verschlechtert werden.

Die genannten Polyamide werden für sich oder in Gemischen eingesetzt. Die Formmassen können auch - abgesehen von den oben genannten Schlagzähkomponenten - weitere Blendkomponenten enthalten wie z. B. Polyolefine, Polyester bzw. Polyetherblockamide (PEBA). Darüber hinaus können sie die üblichen Zusätze enthalten wie etwa Verarbeitungshilfsmittel, Entformungshilfsmittel, Stabilisatoren, Flammschutzmittel, Verstärkungsmittel wie z. B. Glasfasern, Kohlenstoffasern oder mineralische Füllstoffe wie z. B. Glimmer oder Kaolin, oder Weichmacher.

In einer weiteren Ausgestaltung der Erfindung gemäß Anspruch 6 enthält die anspruchsgemäße Formmasse zusätzlich 0,1 bis 20 Gew.-% Kohlenstoffasern, bezogen auf das Gesamtgewicht, wobei aber ein Gehalt von maximal 16 Gew.-% und insbesondere von maximal 12 Gew.-% in der Regel ausreicht. Da die Kohlenstoffasern selbst zur elektrischen Leitfähigkeit beitragen, kann in diesem Falle eine Rußmenge von vorzugsweise 5 bis 18 Gew.-% verwendet werden.

Kohlenstoffasern sind kommerziell erhältlich; sie sind beispielsweise im Römpp Chemie Lexikon, 9. Auflage, S. 2289 f., Thieme, Stuttgart, 1993 sowie in der dort genannten Literatur beschrieben.

Allerdings muß berücksichtigt werden, daß Kohlenstoffasern die Steifigkeit stark erhöhen, was in manchen Fällen, z. B. bei Quickconnectoren, erwünscht sein kann, in anderen Fällen jedoch, z. B. bei Kraftstoffleitungen, nur bis zu einem vorgegebenen Limit zulässig ist.

Als Polyolefin kommen Homopolymere und Copolymere von α-Olefinen mit 2 bis 12 C-Atomen infrage, beispielsweise von Ethylen, Propen, 1-Buten, 1-Hexen oder 1-Octen. Weiterhin geeignet sind Copolymere und Terpolymere, die zusätzlich zu diesen Monomeren weitere Monomere, insbesondere Diene, enthalten, wie beispielsweise Ethylidennorbornen, Cyclopentadien oder Butadien.

Bevorzugte Polyolefine sind Polyethylen und Polypropylen. Grundsätzlich kann hiervon jeder handelsübliche Typ eingesetzt werden. So kommen beispielsweise infrage: lineares Polyethylen hoher, mittlerer oder niedriger Dichte, LDPE, Ethylencopolymere mit kleineren Mengen (bis maximal ca. 40 Gew.-%) an Comonomeren wie n-Butylacrylat, Methylmethacrylat, Maleinsäureanhydrid, Styrol, Vinylalkohol, Acrylsäure, Glycidylmethacrylat o. ä., isotaktisches oder ataktisches Homopolypropylen, Randomcopolymere von Propen mit Ethen und/oder 1-Buten, Ethylen-Propylen-Blockcopolymere und dergleichen mehr. Derartige Polyolefine können auch eine Schlagzahkomponente wie z B. EPM- oder EPDM-Kautschuk oder SEBS enthalten. Darüber hinaus können sie auch, dem Stand der Technik entsprechend, funktionelle Monomere wie Maleinsäureanhydrid, Acrylsäure oder Vinyltrimethoxysilan aufgepfropft enthalten.

Als Fluorpolymere sind beispielsweise Ethylen-Tetrafluorethylen-Copolymere (ETFE; z. B. Tefzel 200 von DuPont oder Hostaflon ET 6235 von Hoechst), Tetrafluorethylen-Hexafluorpropen-Vinylidenfluorid-Terpolymere (THV; z. B. Hostaflon TFB von Hoechst), Ethylen-Chlortrifluorethylen-Copolymere (ECTFE; z. B. Halar von Ausimont) oder Polyvinylidenfluorid (PVDF) geeignet. Diese Polymere können Weichmacher enthalten; die Verwendung von weichmacherfreien Fluorpolymeren ist jedoch bevorzugt.

ETFE, THV und ECTFE sind beispielsweise in H. Domininghaus, Die Kunststoffe und ihre Eigenschaften, 4. Auflage, Kapitel 2.1.7 (Fluor-Kunststoffe) beschrieben.

Herstellung und Struktur von Polyvinylidenfluorid sind ebenfalls bekannt (Hans R. Kricheldorf, Handbook of Polymer Synthesis, Part A, Verlag Marcel Dekker Inc. New York - Basel - Hongkong, S. 191 f.: Kunststoff-Handbuch, 1. Auflage, Band XI, Carl Hanser Verlag München (1971), S. 403 ff.).

Es können auch Polymere auf Basis von Polyvinylidenfluorid enthalten sein, die bis zu 40 Gew.-% andere Monomere aufweisen. Als solche zusätzlichen Monomeren seien beispielsweise genannt: Trifluorethylen, Ethylen, Propen und Hexafluorpropen.

Das eingesetzte Polyvinylidenfluorid weist in der Regel einen Melt Flow-Index von < 17 g/10 min., vorzugsweise von 2 bis 13 g/10 min. (DIN 53 735) auf, gemessen bei 230 °C und unter einer Belastung von 5 kg.

Unter EVOH versteht man ein verseiftes Ethylen-Vinylacetat-Copolymer. In der verseiften Form liegt dann ein Ethylen-Vinylalkohol-Copolymer vor.

Der erfindungsgemäß verwendete Leitruß ist ein Spezialtyp, der sich von den üblichen Leitrußen in den anspruchsgemäßen Parametern unterscheidet. Ein typischer handelsüblicher EC-Ruß (extraconductive black") weist beispielsweise eine DBP-Absorption von 350 ml/100 g, eine spezifische N₂-Oberfläche von 1000 m²/g und einen Aschegehalt von 0,7 Gew.-% auf Der Grund für das unterschiedliche Verhalten in Bezug auf Beständigkeit gegenüber peroxidhaltigen Kraftstoffen sowie Wärmealterung ist unbekannt. Es ist aber zu vermuten, daß das unterschiedliche Verhalten mit den Unterschieden in der Oberflächenstruktur und dadurch bedingter unterschiedlicher katalytischer Aktivität zusammenhängt und daß darüber hinaus der Aschegehalt des Rußes ebenfalls katalytische Wirkung besitzt.

Die erfindungsgemäß verwendeten Ruße können beispielsweise nach dem MMM-Verfahren erhalten werden. Das MMM-Verfahren basiert auf der partiellen Verbrennung von Öl (N. Probst, H. Smet, Kautschuk Gummi Kunststoffe, 7 - 8/95, S. 509 - 511; N. Probst, H. Smet, GAK 11/96 (Jahrgang 49), S. 900 - 905); entsprechende Produkte sind im Handel erhältlich.

Der erfindungsgemäße Artikel ist beispielsweise so geformt, daß ein gasförmiges, flüssiges oder disperses Medium durch ihn durchgeleitet oder in ihm gelagert werden kann. Vorzugsweise ist er eine Komponente eines lösemittel- oder kraftstofführenden Systems, beispielsweise im Kraftfahrzeugsektor, im Flugzeugbau oder in der petrochemischen Industrie. In einer dritten Ausgestaltungsform der Erfindung gemäß Anspruch 11 wird die eingangs charakterisierte Formmasse zur Herstellung eines Kunststoffartikels verwendet, der ausgewählt ist aus der Gruppe Tankstellenversorgungsleitungen, Einfüllstutzen, Entgasungsleitungen, Quickconnectoren, Kraftstoffiltergehäuse, Leitungen für Brems-, Kuhl- oder Hydraulikflüssigkeiten oder Förderleitungen für brennbare, pulvrige bzw. staubförmige Feststoffe.

Der erfindungsgemäße Artikel wird nach üblichen Methoden der Kunststoffverarbeitung hergestellt; je nach Ausführung beispielsweise durch Spritzgießen (Quickconnector), Extrusion (einschichtiges Rohr), Coextrusion (Mehrschichtrohr) oder Blasformen (Kraftstofftank). Mit diesen Methoden ist der Fachmann vertraut, so daß sie hier nicht näher erläutert werden müssen.

Bei einer mehrschichtigen Bauweise wird die Dicke der antistatisch eingestellten Schicht so gewählt, daß einerseits ein gebildetes elektrisches Potential zuverlässig abgeleitet werden kann, andererseits aber aus Kostengründen möglichst wenig Material benötigt wird. Die antistatische Schicht kann hierbei sehr dünn sein, beispielsweise zwischen 0,01 und 0,1 mm. Für bestimmte Einsatzzwecke können jedoch auch Dicken von 0,2 bis 0,3 mm vorteilhaft sein. Im allgemeinen verhält sich die Dicke der antistatischen Schicht zur Summe der Dicken der übrigen Schichten wie 1 : 5 bis 1 : 100.

Die erfindungsgemäßen Artikel weisen eine gute Wärmealterungsbeständigkeit sowie eine gute sour-gas-Beständigkeit auf und erfüllen beispielsweise die Ansprüche der Ford-Spezifikation WSL-M98D28-A gegenüber Kraftstoff nach Ford FLTM AZ 105-01 bzw. PN180 sowie der GM-Spezifikation GM213M gegenüber PN50.

Sie verhindern darüber hinaus wirkungsvoll den Aufbau hoher Spannungen und erfüllen beispielsweise die GM-Spezifikation GM213M (Entwurf April 1993), Punkt 4.19. Ihr Oberflächenwiderstand ist bevorzugt kleiner als 10⁶ Ω/sq. Dies gilt auch nach mehrfachem Knicken und nach Kraftstofflagerung.

Im folgenden seien einige beispielhafte Ausführungsformen näher verdeutlicht:
- Quickconnector in einschichtiger Bauweise aus einer Formmasse, die aus 63 Gew.-% PA 12, 16 Gew.-% anspruchsgemäßem Leitruß (z. B. Ensaco 250 der Firma MMM Carbon, Brüssel), 23 Gew.-% Glasfasern und 5 Gew.-% Schlagzähmacher (beispielsweise EPDM-Kautschuk, mit Maleinsäureanhydrid funktionalisiert) besteht.
- Dreischichtrohr, bestehend aus
   a) einer Außenschicht aus einer Polyamid-Formmasse,
   b) einer daran anschließenden Sperrschicht gemäß EP-A-0 673 762 aus einer Mischung aus 97,5 bis 50 Gew.-% eines Vinylidenfluoridpolymeren und 2,5 bis 50 Gew.-% Polymethacrylimid,
   c) einer anspruchsgemäßen antistatischen Innenschicht.
- Vierschichtrohr, bestehend aus
   a) einer Polyamid-Formmasse,
   b) einer Sperrschicht gemäß EP-A-0 673 762,
   c) einer Polyamid-Formmasse,
   d) einer anspruchsgemäßen antistatischen Innenschicht.

In den folgenden Beispielen wird die Beständigkeit der anspruchsgemaßen Formmassen gegenüber peroxidhaltigem Kraftstoff verglichen mit derjenigen von Formmassen, die unter Verwendung eines konventionellen Leitrußes hergestellt wurden.

### Verwendete Komponenten:

VESTAMID L 1801 nf, ein naturfarbenes PA 12 der Degussa-Hüls AG
PRINTEX L, ein nicht anspruchsgemäßer Leitruß
ENSACO 250, ein anspruchsgemäßer Leitruß
NAUGARD 445, ein Stabilisator
IRGANOX MD 1024, ein Stabilisator
HOECHST WACHS OP, ein Verarbeitungshilfsmittel
EXXELOR VA 1801, ein maleinsäureanhydridmodifizierter Ethylen-Propylen-Kautschuk
EXXELOR VA 1803, ein maleinsäureanhydridmodifizierter Ethylen-Propylen-Kautschuk

Die einzelnen Formmassen wurden auf übliche Weise durch Schmelzemischen der jeweiligen Komponenten, Extrudieren und Granulieren hergestellt; die in der Tabelle angegebenen Mengen sind Gewichtsteile.

Aus den Formmassen wurden mittels Spritzgießen Zugstäbe gemäß DIN EN ISO 527/1A hergestellt.

Als Nullprobe wurden diese Zugstäbe ohne Vorbehandlung einem Zugversuch gemäß DIN ISO 527 unterworfen.

Die Behandlung der Zugstabe mit peroxidhaltigem Kraftstoff erfolgte unter folgenden Bedingungen:
- Lagerungsbedingungen:: Vollkontakt
- Prüfkraftstoff: PN 90 nach FORD (AZ 105-01)
- Peroxidgehalt:: 90 mmol O₂/l
- Temperatur:: 60 °C
- Kraftstoffwechsel:: wöchentlich

Der nachgeschaltete Zugversuch gemäß DIN ISO 527 erfolgte an kraftstofffeuchten Probekörpern. Die Schädigung der Kunststoffmatrix wird in der nachfolgenden Tabelle durch die Streckdehnung Es und die Reißdehnung ε_{R} illustriert. Beide Dehnungswerte fallen im Zeitverlauf bei den erfindungsgemäßen Formmassen signifikant langsamer ab.

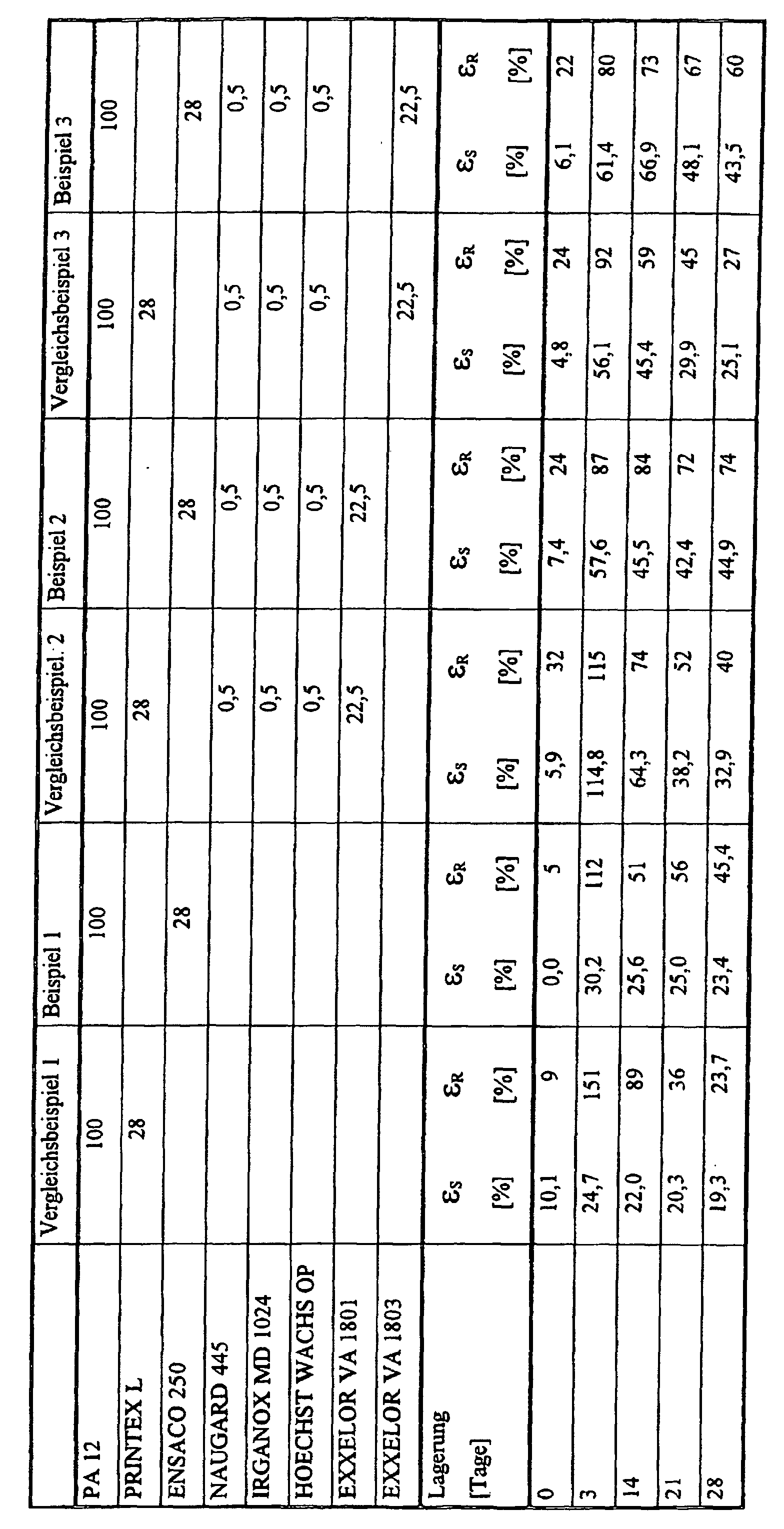

## Patentansprüche

1. Kunststoffartikel, der aus mindestens zwei Schichten besteht, wobei mindestens eine Schicht aus einer thermoplastischen, Polyamid enthaltenden Formmasse besteht, die 3 bis 30 Gew.-% eines Leitrußes enthält,
**dadurch gekennzeichnet,**
**dass** der Leitruß durch folgende Parameter charakterisiert ist:
a) DBP-Absorption von 100 - 300 ml/100 g;
b) Spezifische Oberfläche von 30 - 180 m²/g;
c) Aschegehalt von weniger als 0,1 Gew.-% und
d) Gritanteil von maximal 25 ppm,
wobei mindestens eine der weiteren Schichten aus einem Kautschuk, einer Polyethylen-2.6-naphthalat-Formmasse, einer Polybutylen-2.6-naphthalat-Formmasse, einer Polyvinyliden-(PVDF)-Formmasse, einer Ethylen-Tetrafluorethylen-Copolymer-(ETFE)-Formmasse, einer Tetrafluorethylen-Hexafluorpropen-Vinylidenfluorid-Terpolymer-(THV)-Formmasse, einer Ethylen-Chlortrifluorethylen-Copolymer-(ECTFE)-Formmasse, einer Polyolefin-Formmasse oder einer Ethylen-Vinylalkohol-Copolymer-(EVOH)-Formmasse besteht.

2. Kunststoffartikel gemäß Anspruch 1,
**dadurch gekennzeichnet,**
**dass** die Polyamid enthaltende Formmasse 10 bis 25 Gew.-% des Leitrußes enthält.

3. Kunststoffartikel gemäß Anspruch 1,
**dadurch gekennzeichnet,**
**dass** die Polyamid enthaltende Formmasse 16 bis 20 Gew .-% des Leitrußes enthält.

4. Kunststoffartikel gemäß einem der vorhergehenden Ansprüche,
**dadurch gekennzeichnet,**
**dass** die Polyamid enthaltende Formmasse zusätzlich 0,1 bis 20 Gew.-% Kohlenstofffasern enthält.

5. Kunststoffartikel gemäß einem der vorhergehenden Ansprüche,
**dadurch gekennzeichnet,**
**daß** er eine Komponente eines lösemittel- oder kraftstoffführenden Systems darstellt.

6. Polyamid enthaltende Formmasse, die
I. 3 bis 20 Gew.-% eines Leitrußes sowie
II. 0,1 bis 20 Gew Kohlenstofffasern enthält,
**dadurch gekennzeichnet,**
**dass** der Leitruß durch folgende Parameter charakterisiert ist:
a) DBP-Absorption von 100 - 300 ml/100 g;
b) Spezifische Oberfläche von 30 - 180 m²/g;
c) Aschegehalt von weniger als 0,1 Gew.-% und
d) Gritanteil von maximal 25 ppm.

7. Formmasse gemäß Anspruch 6,
**dadurch gekennzeichnet,**
**dass** sie 5 bis 18 Gew.-% eines Leitrußes enthält.

8. Formmasse gemäß einem der Ansprüche 6 und 7,
**dadurch gekennzeichnet,**
**dass** sie maximal 16 Gew.-% Kohlenstofffasern enthält.

9. Formmasse gemäß einem der Ansprüche 6 und 7,
**dadurch gekennzeichnet,**
**dass** sie maximal 12 Gew.-% Kohlenstofffasern enthält

10. Formmasse gemäß einem der Ansprüche 6 bis 9,
**dadurch gekennzeichnet,**
**dass** sie Zusätze enthält, die ausgewählt sind aus der Gruppe Verarbeitungshilfsmittel, Entformungsmittel, Stabilisatoren, Flammschutzmittel, Glasfasern, mineralische Füllstoffe und Weichmacher.

11. Verwendung einer Polyamid enthaltenden Formmasse, die 3 bis 30 Gew.-% eines Leitrußes enthält, zur Herstellung eines Kunststoffartikels, der ausgewählt ist aus der Gruppe Tankstellenversorgungsleitung, Einfüllstutzen, Entgasungsleitung, Quickconnector, Kraftstofffiltergehäuse, Leitung für Brems-, Kühl- oder Hydraulikflüssigkeit oder Förderleitung fur brennbare, pulvrige bzw. staubförmige Feststoffe,
**dadurch gekennzeichnet,**
**dass** der Leitruß durch folgende Parameter charakterisiert ist.
a) DBP-Absorption von 100 - 300 ml/g;
b) Spezifische Oberfläche von 30 - 180 m²/g;
c) Aschegehalt von weniger als 0,1 Gew.-% und
d) Gritanteil von maximal 25 ppm.

12. Verwendung gemäß Anspruch 11,
**dadurch gekennzeichnet,**
**dass** die Polyamid enthaltende Formmasse 10 bis 25 Gew.-% des Leitrußes enthält.

13. Verwendung gemäß Anspruch 11,
**dadurch gekennzeichnet,**
**dass** die Polyamid enthaltende Formmasse 16 bis 20 Gew.-% des Leitrußes enthält

14. Verwendung gemäß einem der Ansprüche 11 bis 13,
**dadurch gekennzeichnet,**
**dass** die Polyamid enthaltende Formmasse zusätzlich 0,1 bis 20 Gew.-% Kohlenstofffasern enthält.

15. Verwendung gemäß einem der Ansprüche 11 bis 14,
**dadurch gekennzeichnet,**
**dass** die Polyamid enthaltende Formmasse Zusätze enthält, die ausgewählt sind aus der Gruppe Verarbeitungshilfsmittel, Entformungsmittel, Stabilisatoren, Flammschutzmittel, Glasfasern, mineralische Füllstoffe und Weichmacher.

16. Verwendung gemäß einem der Ansprüche 11 bis 15,
**dadurch gekennzeichnet,**
**dass** der Kunststoffartikel einen einschichtigen Aufbau besitzt.

17. Verwendung gemäß einem der Ansprüche bis 15,
**dadurch gekennzeichnet,**
**dass** der Kunststoffartikel aus mindestens zwei Schichten besteht, wobei mindestens eine Schicht aus der Polyamid enthaltenden Formmasse und die weiteren Schichten aus anderen, nicht antistatisch eingestellten Formmassen bestehen.

## Claims

1. A plastics article composed of at least two layers, at least one layer being composed of a thermoplastic moulding composition which contains polyamide and which contains from 3 to 30% by weight of a conductivity black, **characterized in that** the conductivity black is defined by the following parameters:
a) DBP absorption of from 100 to 300 ml/100 g;
b) a specific surface area of from 30 to 180 m²/g;
c) an ash content of less than 0.1% by weight; and
d) a grit content of not more than 25 ppm,
at least one of the other layers being composed of a rubber, of a polyethylene 2,6-naphthalate moulding composition, of a. polybutylene 2,6-naphthalate moulding composition, of a polyvinylidene (PVDF) moulding composition, of an ethylene-tetrafluoroethylene copolymer (ETFE) moulding composition, of a tetrafluoroethylene-hexafluoropropene-vinylidene fluoride terpolymer (THV) moulding composition, of an ethylene-chloro-trifluoroethylene copolymer (ECTFE) moulding composition, of a polyolefin moulding composition or of an ethylene-vinyl alcohol copolymer (EVOH) moulding composition.

2. A plastics article according to claim 1, **characterized in that** the moulding composition containing polyamide contains from 10 to 25% by weight of the conductivity black.

3. A plastics article according to claim 1, **characterized in that** the moulding composition containing polyamide contains from 16 to 20% by weight of the conductivity black.

4. A plastics article according to any one of the preceding claims, **characterized in that** the moulding composition containing polyamide also contains from 0.1 to 20% by weight of carbon fibres.

5. A plastics article according to any one of the preceding claims, **characterized in that** the article is a component of a system transporting solvent or motor fuel.

6. A moulding composition which contains polyamide and contains
I from 3 to 20% by weight of a conductivity black, and
II from 0.1 to 20% by weight of carbon fibres, **characterized in that** the conductivity black is defined by the following parameters:.
a) DBP absorption of from 100 to 300 ml/100 g;
b) a specific surface area of from 30 to 180 m²/g;
c) an ash content of less than 0.1% by weight; and
d) a grit content of not more than 25 ppm.

7. A moulding composition according to claim 6, **characterized in that** it contains from 5 to 18% by weight of a conductivity black.

8. A moulding composition according to either one 'of claims 6 and 7, **characterized in that** it contains at most 16% by weight of carbon fibres.

9. A moulding composition according to either one_ of claims 6 and 7, **characterized in that** it contains at most 12% by weight of carbon fibres.

10. A moulding composition according to any one of claims 6 to 9, **characterized in that** it contains additives selected from the group consisting of processing aids, mould-release agents, stabilizers, flame retardants, glass fibres, mineral fillers and plasticizers.

11. Use of a moulding composition which contains polyamide and contains from 3 to 30% by weight of a conductivity black, for producing a plastics article selected from the group consisting of petrol station supply piping, filling nozzles, piping for gas-removal systems, quick connectors, motor fuel filter casings, piping for brake fluids, for coolants or for hydraulic fluids, or piping for conveying combustible powders or dusts, **characterized in that** the conductivity black is **characterized by** the following parameters:
a) DBP absorption of from 100 to 300 ml/100 g;
b) a specific surface area of from 30 to 180 m²/g;
c) an ash content of less than 0.1% by weight; and
d) a grit content of not more than 25 ppm.

12. Use according to claim 11, **characterized in that** the moulding composition containing polyamide contains from 10 to 25% by weight of the conductivity black.

13. Use according to claim 11, **characterized in that** the moulding composition containing polyamide contains from 16 to 20% by weight of the conductivity black.

14. Use according to any one of claims 11 to 13, **characterized in that** the moulding composition containing polyamide also contains from 0.1 to 20% by weight of carbon fibres.

15. Use according to any one of claims 11 to 14, **characterized in that** the moulding composition containing polyamide contains additives selected from the group consisting of processing aids, mould-release agents, stabilizers, flame retardants, glass fibres, mineral fillers and plasticizers.

16. Use according to any one of claims 11 to 15, **characterized in that** the plastics article has a single-layer structure.

17. Use according to any one of claims 11 to 15, **characterized in that** the plastics article is composed of at least two layers, at least one layer being composed of the moulding composition containing polyamide, and the other layers being composed of other moulding compositions which have not been rendered antistatic.

## Revendications

1. Article en matière synthétique composé d'au moins deux couches, au moins l'une de ces couches étant constituée d'une matière moulable thermoplastique contenant du polyamide et renfermant de 3 à 30 % en poids d'une suie conductrice,
**caractérisé en ce que**
la suie conductrice présente les paramètres caractéristiques suivants :
a) absorption de DBP de 100 à 300 ml/100 g ;
b) surface spécifique de 30 à 180 m ²/g ;
c) teneur en cendre de moins de 0,1 % en poids ;
d) grès à particules grossières en proportion de 25 ppm au maximum,
et au moins l'une des autres couches étant constituée d'un caoutchouc, d'une matière moulable à base de 2,6-naphtalate de polyéthylène, d'une matière moulable à base de 2,6-naphtalate de polybutylène, d'une matière moulable à base de polyvinylidène (PVDF), d'une matière moulable à base de copolymère d'éthylène-tétrafluoréthylène (ETFE), d'une matière moulable à base de terpolymère de tétrafluoréthylène-hexafluoropropène-fluorure de vinylidène ((THV), d'une matière moulable à base de copolymère d'éthylène-chlorotrifluoréthylène (ECTFE), d'une matière moulable à base de polyoléfine ou d'une matière moulable à base de copolymère d'éthylène-alcool vinylique (EVOH).

2. Article en matière synthétique selon la revendication 1,
**caractérisé en ce que**
la matière moulable contenant le polyamide renferme de 10 à 25 % en poids de la suie conductrice.

3. Article en matière synthétique selon la revendication 1,
**caractérisé en ce que**
la matière moulable contenant le polyamide renferme de 16 à 20 % en poids de la suie conductrice.

4. Article en matière synthétique selon l'une des revendications précédentes,
**caractérisé en ce que**
la matière moulable contenant le polyamide renferme en outre de 0,1 à 20 % en poids de fibres de carbone.

5. Article en matière synthétique selon l'une des revendications précédentes,
**caractérisé en ce qu'**
il représente un composant d'un système conduisant un solvant ou un carburant.

6. Matière moulable contenant du polyamide et qui renferme
I. de 3 à 20 % en poids d'une suie conductrice ;
II. de 0,1 à 20 % en poids de fibres de carbone,
**caractérisée en ce que**
la suie conductrice présente les paramètres caractéristiques suivants :
a) absorption de DBP de 100 à 300 ml/100 g ;
b) surface spécifique de 30 à 180 m ²/g ;
c) teneur en cendres de moins de 0,1 % en poids ;
d) grès à particules grossières en proportion de 25 ppm au maximum.

7. Matière moulable selon la revendication 6,
**caractérisé en ce qu'**
elle renferme de 5 à 18 % en poids d'une suie conductrice.

8. Matière moulable selon l'une des revendications 6 ou 7,
**caractérisé en ce qu'**
elle renferme au maximum 16 % en poids de fibres de carbone.

9. Matière moulable selon l'une des revendications 6 ou 7,
**caractérisée en ce qu'**
elle renferme au maximum 12 % en poids de fibres de carbone.

10. Matière moulable selon l'une des revendications 6 à 9,
**caractérisé en ce qu'**
elle contient des additifs sélectionnés au sein du groupe des produits suivants : adjuvants de traitement, agents de démoulage, stabilisateurs, produits ignifugeants, fibres de verre, matières de remplissage minérales et agents plastifiants.

11. Utilisation d'une matière moulable, contenant un polyamide et qui renferme de 3 à 30 % en poids d'une suie conductrice, en vue de la fabrication d'un article en matière synthétique, sélectionné au sein du groupe constitué des articles suivants : conduite d'alimentation de station-service, tubulure de remplissage, conduite de dégazage, connecteur rapide, logement de filtre de carburant, conduite pour liquide de frein, liquide de refroidissement ou fluide hydraulique, ou encore conduite de transport pour matières solides combustibles, pulvérulentes ou en forme de poussière,
**caractérisée en ce que**
la suie conductrice présente les paramètres caractéristiques suivants :
a) absorption de DBP de 100 à 300 ml/100 g ;
b) surface spécifique de 30 à 180 m ²/g ;
c) teneur en cendres de moins de 0,1 % en poids ;
d) grès à particules grossières en proportion de 25 ppm au maximum.

12. Utilisation selon la revendication 11,
**caractérisée en ce que**
la matière moulable contenant le polyamide renferme de 10 à 25 % en poids de la suie conductrice.

13. Utilisation selon la revendication 11,
**caractérisée en ce que**
la matière moulable contenant le polyamide renferme de 16 à 20 % en poids de la suie conductrice.

14. Utilisation selon l'une des revendications 11 à 13,
**caractérisée en ce que**
la matière moulable contenant le polyamide renferme en outre de 0,1 à 20 % en poids de fibres de carbone.

15. Utilisation selon l'une des revendications 11 à 14,
**caractérisé en ce que**
la matière moulable contenant le polyamide renferme des additifs sélectionnés au sein du groupe des produits suivants : adjuvants de traitement, agents de démoulage, stabilisateurs, produits ignifugeants, fibres de verre, matières de remplissage minérales et agents plastifiants.

16. Utilisation selon l'une des revendications 11 à 15,
**caractérisée en ce que**
l'article en matière synthétique possède une structure en une seule couche.

17. Utilisation selon l'une des revendications 11 à 15,
**caractérisée en ce que**
l'article en matière synthétique se compose d'au moins deux couches, au moins l'une de ces couches étant constituée de la matière moulable contenant du polyamide, et les autres couches étant constituées d'autres matières moulables non ajustées de manière antistatique.
